# EUROPEAN PATENT APPLICATION

(11) **EP 2 050 488 A1**
(43) Date of publication of application: **22.04.2009**
(21) Application number: 08380222.3
(22) Date of filing: 24.07.2008
(51) Int. Cl.: B01D 29/15, B01D 29/23, B01D 29/27

(54) **A swimming pool filter**

(30) Priority: 16.10.2007 ES 200702083 U
(71) Applicant: Astral Pol Group, S.L.U., 08208 Sabadell (Barcelona) (ES)
(72) Inventor: Serrano Sanchez, Emilio, 08208 Sabadell (Barcelona) (ES); Tapias Baque, David, 08208 Sabadell (Barcelona) (ES)
(74) Representative: Pastells Teixido, Manuel

(57) **Abstract**

This swimming pool filter comprises a body (1) being provided with a top cover (2) and innerly having a filtering element. A characterising feature lies in the fact that the filtering element is made up by a bag (6) being fitted to a support being formed by grid-like pieces (7, 8 and 9) being arranged one inside the other. These pieces are in the number of three and have a tapered make-up with different diameters, and of them the biggest one (7) receives in its inside the intermediary one (8) with inverted taper and the smallest one (9) is placed in the inside of the intermediary one (8), the bag (6) being arranged in a folded arrangement and in such a manner defining three lengths between said three pieces. The body (1) has at its base the diametrically opposed water inlet (10) and outlet (11) connections and the cover (2) is fixed to the body (1) by means of a peripheral nut (5).

## Description

### OBJECT OF THE INVENTION

A swimming pool filter.

### BACKGROUND OF THE INVENTION

For the cleaning of the swimming pool water several types of filters are already known which comprise a casing body having water inlet and outlet connections and being completed with a top cover and generally with a footing or support feet, a sand filling or a filtering cartridge being arranged in said casing body.

### SUMMARY OF THE INVENTION

This invention has as its object a swimming pool filter having a compact make-up with a very reduced size so as to be in a position to be used in all kinds of facilities, and a structure being such as to allow to carry out its cleaning in an expedient manner.

A characterising feature of this filter lies in the make-up of the filtering element, this latter being made out of a bag being fitted to a support being formed by grid-like pieces being arranged one inside the other.

The support is formed by three tapered pieces of different diameters, of which the biggest one receives in its inside the intermediary one with inverted taper and the smallest one is placed in the inside of the intermediary one, the bag being arranged in a folded arrangement and in such a manner defining three lengths between said three pieces.

The filter body comprises a top cover being fitted by means of a threaded connection, the cleaning of the bag being carried out by gaining access to it upon having removed the cover, or else by incorporating a selector valve to this latter.

These and other characterising features will be best made apparent by the following detailed description whose understanding will be made easier by the accompanying two sheets of drawings showing a practical embodiment being cited only by way of example not limiting the scope of the present invention.

### DESCRIPTION OF THE DRAWINGS

In the drawings:
Figs. 1, 2 and 3 illustrate in a perspective view, in an elevational view and in a sectional elevation, respectively, the filter being the object of the invention;
Fig. 4 depicts in a perspective view the assembly of the three pieces forming the filter bag support; and
Figs. 5 and 6 show in an elevational view and in a sectional elevation, respectively, the filter incorporating a selector valve being fitted to the cover.

### DETAILED DESCRIPTION

According to the drawings the filter comprises a slightly frustoconical body (1) being made of plastics material and upperly closed with a cover (2) being provided with a manometer (3) indicating the pressure in the inside of the body, and with a bleeding outlet (4). This cover (2) is fitted to the body (1) by means of a peripheral nut (5).

The filtering element is arranged in the inside of the body (1) and is made up by a bag (6) being formed by a monofil fabric having a constant pore size, a high tensile strength, a high dimensional stability and a high open space percentage and being easy to clean.

This bag is fitted to a support being formed by three tapered, grid-like pieces being made of plastics material and having different diameters, said pieces namely being the biggest one (7), the intermediary one (8) and the smallest one (9). The smallest piece (9) is fixed at its upper open end (9') to the cover (2) and the intermediary piece (8) is fixed at its lower open end (8') to the bottom of the body (1).

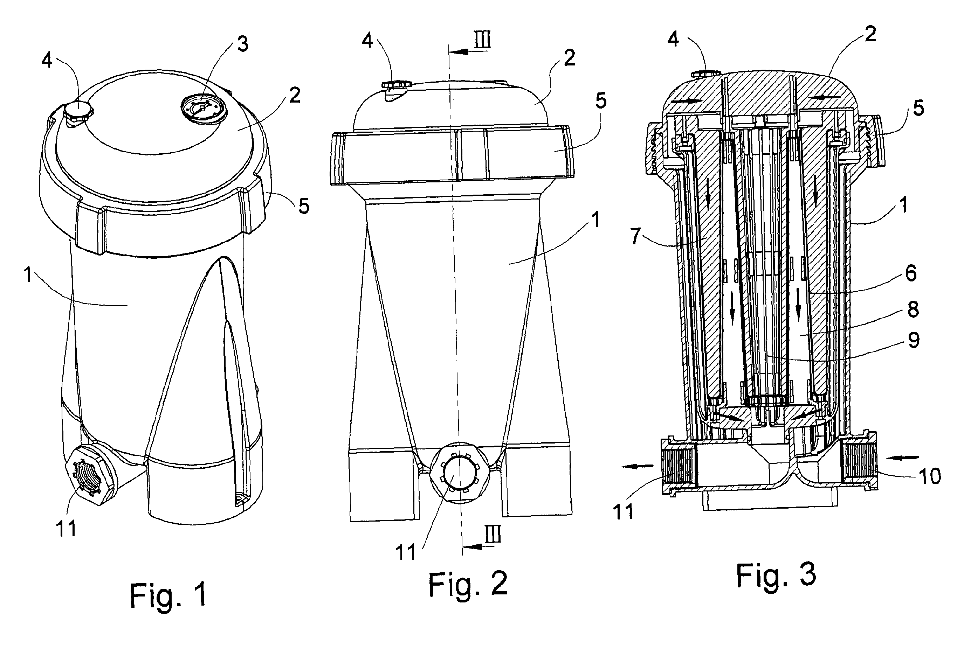

The biggest piece (7) receives in its inside the intermediary piece (8) with inverted taper and the intermediary piece receives in its inside the smallest piece (9) (Fig. 3).

The bag (6) is arranged in a folded arrangement in three concentric lengths between said three pieces, a big filtering surface being thus obtained without an increase in the filter size.

In order to clean the bag (6) the cover (2) will be removed and the three pieces (7), (8) and (9) forming the support will be separated, the bag being thus easily removable.

The body (1) has at its base the threaded and diametrically opposed water inlet (10) and outlet (11) connections, and the draining outlet.

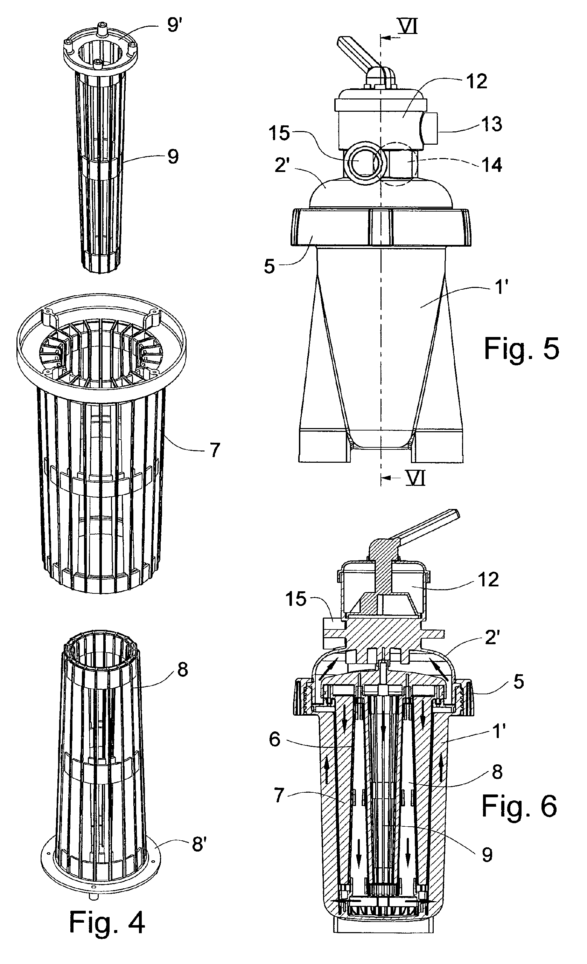

The washing of the bag (6) can also be obtained by fitting a manually (Fig. 5) or automatically operated selector valve (12) to the filter cover (2') being fitted to the body (1').

This selector valve (12) will advantageously be a four-way valve (for carrying out the filtering, washing, closing and recirculating functions) with glue-on connections. Said valve will incorporate an inlet connection (13) for the water from the pump, an outlet connection (14) for the water being sent to the swimming pool, and a drainage connection (15).

In this case the manometer and the upper bleeding outlet are situated at the body of the selector valve (12).

## Claims

1. A swimming pool filter comprising a body (1) being provided with a top cover (2) and innerly having a filtering element, **characterised in that** the filtering element is made up by a bag (6) being fitted to a support being formed by grid-like pieces (7, 8 and 9) being arranged one inside the other.

2. A swimming pool filter, as per claim 1, **characterised in that** the support is formed by three tapered pieces of different diameters, of which the biggest one (7) receives in its inside the intermediary one (8) with inverted taper and the smallest one (9) is placed in the inside of the intermediary one (8), the bag (6) being arranged in a folded arrangement and in such a manner defining three lengths between said three pieces (7, 8 and 9).

3. A swimming pool filter, as per claim 1, **characterised in that** the body (1) has at its base the diametrically opposed water inlet (10) and outlet (11) connections and the cover (2) is fixed to the body by means of a peripheral nut (5).
A swimming pool filter, as per claim 1, **characterised in that** the cover (2') integratedly comprises a multiway selector valve (12).
